(19) Europäisches Patentamt
European Patent Office
Office européen des brevets

(11) **EP 3 036 110 B1**

(12) **EUROPÄISCHE PATENTSCHRIFT**

(45) Veröffentlichungstag und Bekanntmachung des Hinweises auf die Patenterteilung:
**31.05.2017 Patentblatt 2017/22**

(51) Int Cl.:
***B41M 1/14*** *(2006.01)* ***B41M 3/14*** *(2006.01)*

(21) Anmeldenummer: **14744466.5**

(86) Internationale Anmeldenummer:
**PCT/EP2014/002036**

(22) Anmeldetag: **25.07.2014**

(87) Internationale Veröffentlichungsnummer:
**WO 2015/024619 (26.02.2015 Gazette 2015/08)**

(54) **DRUCKBILD**

PRINTED IMAGE

IMAGE IMPRIMÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2013 EP 13004179**

(43) Veröffentlichungstag der Anmeldung:
**29.06.2016 Patentblatt 2016/26**

(73) Patentinhaber: **Merck Patent GmbH 64293 Darmstadt (DE)**

(72) Erfinder:
• **KLEIN, Sylke 64380 Rossdorf (DE)**
• **MONTAG, Heidemarie 64395 Brensbach (DE)**

(56) Entgegenhaltungen:
**EP-A1- 1 422 070 EP-A1- 2 174 796 DE-A1-102011 016 511**

**EP 3 036 110 B1**

**Beschreibung**

Die vorliegende Erfindung bezieht sich auf ein Druckbild auf einem Substrat, insbesondere auf ein Druckbild, welches plättchenförmige Effektpigmente enthält und auffällige Matt-Glanz-Effekte zeigt, auf ein Verfahren zur Herstellung eines derartigen Druckbildes sowie auf die Verwendung eines solchen Druckbildes, insbesondere zu dekorativen oder Sicherheitszwecken.

Dekorative Artikel wie beispielsweise Verpackungen hochwertiger Güter, Papeterieerzeugnisse oder insbesondere auch verschiedene Wertdruckerzeugnisse werden seit Jahren mit hochwertigen Aufdrucken versehen, um auffällige optische Effekte zu erzeugen, die Aufmerksamkeit erregen sollen. Oft enthalten die dazu benötigten Druckfarben Perlglanzpigmente oder Metalleffektpigmente, die wegen ihres schimmernden optischen Erscheinungsbildes, welches auch mit dem Betrachtungswinkel wechseln kann, für die genannten Anwendungen besonders geeignet erscheinen.

Insbesondere bei Sicherheitsdruckerzeugnissen werden zunehmend die durch die genannten Effektpigmente erzielbaren optischen Effekte noch zusätzlich mit funktionellen Eigenschaften wie beispielsweise elektrische Leitfähigkeit oder magnetische Ausrichtbarkeit verknüpft, um die Kopierbarkeit der Produkte zu verhindern und damit deren Fälschungssicherheit zu erhöhen.

Auf Grund der hohen Produktivität und der am Markt etablierten Verfahren eignen sich Druckverfahren besonders für die Herstellung von in der Herstellung preisgünstigen Massenprodukten mit hoher Qualität. Es wird daher bei der Entwicklung von Dekorationselementen oder funktionellen und/oder dekorativen Sicherheitsmerkmalen zunehmend wichtiger, dass sich solche Elemente auf einfache Weise in Druckverfahren herstellen lassen.

Ein besonderes Augenmerk gilt stark glänzenden Oberflächen, die auf eine Vielzahl von Substraten in üblichen Druckverfahren aufgebracht werden können. Als Sicherheitsmerkmal eingesetzt, sollte die stark glänzende Oberfläche zumindest noch über eine andere, nicht-optische Funktion verfügen. Bevorzugt werden stark glänzende Oberflächenabschnitte in Kombination mit anders- oder gleichfarbigen, nicht oder nur schwach glänzenden Oberflächenabschnitten eingesetzt, beispielsweise in Form grafischer Muster.

Die Stärke des Glanzes von Oberflächen kann mittels des Reflexionsgrades der entsprechenden Oberfläche beschrieben werden. Der Reflexionsgrad einer Oberfläche, auf die elektromagnetische Strahlung einwirkt, wird im Wesentlichen durch die Phänomene Reflexion, Streuung und Brechung bestimmt. Idealerweise wird der höchste Reflexionsgrad bei möglichst vollständiger Reflexion des eingestrahlten gerichteten Lichtes - ohne wesentliche Anteile der ungerichteten Streuung oder Brechung - erreicht, z. B. zu beobachten beim Spiegeleffekt von hochpolierten Metalloberflächen oder von Metallschichten, die aus der Gasphase auf ideal ebene Substrate wie z. B. Glasscheiben abgeschieden werden.

Der Reflexionsgrad von elektromagnetischer Strahlung an einer Oberfläche wird als das Verhältnis von gerichtet reflektierter Lichtintensität zur eingestrahlten gerichteten Lichtintensität definiert. Phänomenologisch wird dabei die gerichtete Reflexion einer Oberfläche als Glanzeffekt, die ungerichtete diffuse Reflexion als Matteffekt wahrgenommen. Physikalisch ist Glanz definiert als der Quotient aus dem gerichtet und dem diffus reflektierten Anteil des auf eine Oberfläche fallenden Lichtes.

An ebenen nichtmetallischen Oberflächen wird das eingestrahlte gerichtete Licht nicht nur reflektiert, sondern auch gebrochen. Die Größe des Reflexionsgrades hängt vom Einstrahlwinkel und vom Unterschied der Brechzahlen ab, d.h. der Reflexionsgrad steigt mit wachsender Brechzahl der nichtmetallischen Oberfläche bei konstantem Einstrahlwinkel.

Um in Effektpigment-haltigen Oberflächenschichten einen hohen Reflexionsgrad zu erzielen, müssen die Effektpigmente selbst eine möglichst plane Pigmentoberfläche und eine ausgeprägte Plättchenform aufweisen und in der Schicht parallel zur Substratoberfläche ausgerichtet sein. Je mehr Pigmente in Reflexionsstellung liegen, umso höher sind der erzielte Reflexionsgrad und das glänzende, metallisch aussehende Erscheinungsbild.

Beste Reflexionswerte werden mit Metallpigmenten erzielt, die zur besseren Glanzerzeugung an der Oberfläche des Applikationsmediums üblicherweise mit einer Oberflächenmodifizierung versehen werden, die bei den Pigmenten den so genannten Leafing-Effekt erzeugt. Diese finale Pigmentbeschichtung führt dazu, dass die resultierenden Pigmente vom verwendeten Bindemittel nicht mehr vollständig benetzt werden und das Bestreben haben, im applizierten Nassfilm aufzuschwimmen und sich an der Schichtoberfläche auszurichten. Bei Metallpigmenten wird zur Erzielung des Leafing-Effektes häufig Stearinsäure eingesetzt, welche zu einer hydrophilen/oleophoben Oberflächenbeschaffenheit dieser Effektpigmente führt. Derartig beschichtete Metallpigmente werden in der Regel in Automobillacken eingesetzt.

Eine gegenteilige Wirkung kann mit einer Oberflächenbehandlung erzielt werden, bei der statt Stearinsäure verzweigte oder ungesättigte Fettsäuren, wie z.B. Ölsäure, verwendet werden. Hierdurch wird ein Non-Leafing-Effekt erzeugt. Die Pigmentoberfläche wird durch diese Behandlung oleophil. Diese Non-Leafing-Pigmente lassen sich gut mit den üblichen Lack-Bindemitteln benetzen und in Lacke oder Farben einarbeiten.

Metallpigmente werden wahlweise entweder nur als Leafing-Typen (Goldbronze, Zinkpigmente) oder als Leafing- und Non-Leafing-Typen (Aluminiumpigmente) im Markt angeboten.

Der mit Metallpigment-haltigen Schichten erzeugte Reflexionseffekt ist abhängig vom Beobachtungswinkel. Eine aussagekräftige Größe für diesen als "metallic travel" oder Helligkeitsflop bezeichneten Effekt ist der so genannte Flop Index. Während mit einfachen Glanzmessgeräten der Glanz bei einem festen Winkel (20°, 60° oder 85°) bestimmt wird, ist der Flop Index durch die Helligkeitswerte (L*-Werte im CIELAB System) bei 15°, 45° und 110° charakterisiert. Ausgehend vom Glanzwinkel wird die Änderung der Reflexion über diesen großen Bereich des Beobachtungswinkels betrachtet. Der Flop Index ist definiert als:

$$Flop\ Index = \frac{2{,}69\ (L^*_{15°} - L^*_{110°})^{1{,}11}}{(L^*_{45°})^{0{,}86}}$$

Bei einfarbigen Absorptionspigment-haltigen Schichten ist der Flop Index gleich Null, bei Metallpigment-haltigen Schichten mit einem sehr hohen Reflexionsgrad liegt der Flop Index zwischen 15 und 17.

Auch Effektpigmente mit nichtmetallischer Oberfläche, wie mit Metallverbindungen, insbesondere Metalloxiden, beschichtete Metallpigmente, oder mit Metalloxiden oder -oxidhydraten ein- oder mehrfach beschichtete nichtmetallische Substrate, wie natürliche und synthetische Glimmer-, Borosilikat-, Siliziumdioxid-, Aluminiumoxid- und Titanoxidplättchen, zeigen ein winkelabhängiges Reflexionsverhalten. Diese Pigmente sind kommerziell erhältlich, z. B. unter den Handelsnamen Meoxal®, Iriodin®, Phoenix®, Pyrisma®, Miraval®, Firemist®, Colorstream®, Colorcrypt® und Xirallic®.

Üblicherweise werden solche Effektpigmente mit nichtmetallischer Oberfläche z. B. mit Silizium-organischen Verbindungen wie Silanen mit Fluorgruppen (EP 1203794; EP 1203795; US 7,160,374) bzw. Polysiloxanen (US 4,544,415; WO 96/32446) als äußere Hülle nachbeschichtet, um ihre Wetterstabilität zu erhöhen und dennoch eine ausreichend gute Orientierung/ Ankopplung der Effektpigmente an eine Farbschicht oder ein zu pigmentierendes Kunststoffbauteil zu erzielen.

Werden diese Effektpigmente mit funktionalisierten Silanen/ Siloxanen beschichtet, zeigen sie in der Pulverlackanwendung überraschenderweise ebenso einen Leafing-Effekt, der sich in einer höheren Helligkeit, aber auch in einer verstärkten gerichteten Streuung an der beschichteten Oberfläche äußert. Bedingt durch die erhöhte Streuung weisen die so pigmentierten Pulverlackschichten einen reduzierten Glanz auf, verglichen mit Pulverlackschichten, die unbeschichtete Effektpigmente enthalten.

Bezüglich des Einsatzes in Druckfarben liegen hinsichtlich einer Oberflächenbehandlung von Effektpigmenten mit nichtmetallischen Oberflächen, die zu einem Leafing-Effekt führen könnte, bisher keine weitreichenden Untersuchungen vor, da Effektpigmente, die in Druckfarben angewendet werden sollen, üblicherweise, wenn überhaupt, lediglich solche Oberflächenmodifizierungen erhalten, die eine stabile, homogene und absetzfreie Einarbeitung der Effektpigmente in die Druckfarbe erleichtern.

Dokument EP1422070 offenbart ein Druckbild auf einem Substrat, welches aus zwei Flächeneinheiten besteht, wobei eine der Flächeneinheiten plättchenförmige Effektpigmente enthält. Aufgabe der vorliegenden Erfindung ist es, bei Verwendung von Effektpigmenten mit nichtmetallischer Oberflächenschicht in einem Druckverfahren Druckbilder zur Verfügung zu stellen, die zumindest in Teilbereichen einen sehr hohen Glanz aufweisen, der mit korrespondierenden Matt-Effekten kombiniert werden kann, ohne dass idealer Weise die stoffliche Zusammensetzung der eingesetzten Pigmente für die Glanz- und Matteffekte wesentlich voneinander verschieden ist, bei möglichst gleichzeitigern Vorhandensein zumindest einer nicht-optischen Funktion des Druckbildes.

Eine weitere Aufgabe der vorliegenden Erfindung besteht darin, ein Verfahren zur Herstellung der vorab beschriebenen Druckbilder zur Verfügung zu stellen.

Darüber hinaus besteht eine zusätzliche Aufgabe der vorliegenden Erfindung darin, die Verwendung der so erzeugten Druckbilder vorzuschlagen.

Die Aufgabe der vorliegenden Erfindung wird gelöst durch ein Druckbild auf einem Substrat, wie es in Anspruch 1 definiert wird. Außerdem wird die Aufgabe der vorliegenden Erfindung gelöst durch ein Verfahren zur Herstellung eines oben beschriebenen Druckbildes, wie es in Anspruch 12 definiert wird. Darüber hinaus wird die Aufgabe der vorliegenden Erfindung auch durch die Verwendung eines oben beschriebenen Druckbildes als Dekorationselement, als Funktionselement oder als Sicherheitsmerkmal auf einem Produkt gelöst.

Ein Druckbild im Sinne der vorliegenden Erfindung ist eine mittels eines üblichen Druckverfahrens auf ein Substrat aufgebrachte, feste, flächige Beschichtung auf einem solchen Substrat.

Das Druckbild gemäß der vorliegenden Erfindung weist zumindest zwei Flächeneinheiten auf, die jeweils plättchenförmige Effektpigmente und ein Bindemittel enthalten, und die voneinander unterscheidbar sind. Erfindungsgemäß sind die mindestens zwei Flächeneinheiten optisch voneinander unterscheidbar, indem sie zumindest voneinander verschiedene Reflexionsgrade, respektive Flop Indices, aufweisen. Dieser Unterschied äußert sich phänomenologisch durch einen optisch mit bloßem Auge sichtbaren Matt-Glanz-Effekt, wobei eine der Flächeneinheiten einen Matt-Effekt und die andere Flächeneinheit einen ausgeprägten Glanz-Effekt aufweist.

Zusätzlich können die mindestens zwei Flächeneinheiten auch voneinander verschiedene Farbeindrücke sowie gleiche oder verschiedene Funktionalitäten, wie intrinsische oder direkte elektrische Leitfähigkeit, magnetische oder magnetisierbare Eigenschaften, IR und/oder UV-Absorptionseigenschaften oder Lumineszenzeigenschaften (Fluoreszenz, Phosphoreszenz oder Elektrolumineszenz) aufweisen.

Das erfindungsgemäße Druckbild weist mindestens zwei Flächeneinheiten auf, die plättchenförmige Effektpigmente und ein Bindemittel enthalten, kann jedoch auch drei oder mehr solcher Flächeneinheiten aufweisen. Dabei müssen mindestens zwei dieser Flächeneinheiten voneinander verschieden sein, also zumindest den oben beschriebenen Unterschied in den jeweiligen Flop Indices aufweisen. Diese beiden Flächeneinheiten sind vorzugsweise auf dem Substrat einander unmittelbar benachbart oder so nah beieinander angeordnet, dass sie bei Betrachtung gleichzeitig mit dem bloßen Auge erfassbar sind.

Die erste und zweite Flächeneinheit können sich auf dem erfindungsgemäßen Druckbild beispielsweise auch abwechselnd fortlaufend wiederholen oder stern- oder kreisförmig von innen nach außen miteinander abwechselnd angeordnet sein.

Der grafischen Gestaltung des Druckbildes sind insofern keine Beschränkungen auferlegt, solange das Druckbild mindestens zwei voneinander unterscheidbare Flächeneinheiten der oben beschriebenen Art aufweist.

Selbstverständlich muss nicht das gesamte Substrat mit dem erfindungsgemäßen Druckbild beschichtet sein. Im Sinne der vorliegenden Erfindung ist es ausreichend, wenn lediglich Teilflächen des jeweiligen Substrates mit dem erfindungsgemäßen Druckbild versehen sind.

Jede der vorab beschriebenen mindestens zwei Flächeneinheiten enthält plättchenförmige Effektpigmente.

Dabei enthält die erste Flächeneinheit plättchenförmige Effektpigmente, die auf beschichteten Trägerplättchen basieren und eine äußere Schicht aus einem nichtmetallischen, anorganischen Material aufweisen.

Als Trägerplättchen eignen sich dabei alle bekannten plättchenförmigen Trägermaterialien, die üblicherweise zur Herstellung von Effektpigmenten eingesetzt werden, d.h. metallische und nichtmetallische Trägerplättchen.

Vorzugsweise werden jedoch transparente oder semitransparente Trägerplättchen eingesetzt. Geeignet sind z. B. Schichtsilikate, insbesondere synthetischer oder natürlicher Glimmer, Glasplättchen, Metallplättchen, $SiO_x$-Plättchen ($x \leq 2{,}0$; vorzugsweise ist $x = 2$), $Al_2O_3$-Plättchen, $TiO_2$-Plättchen, synthetische oder natürliche Eisenoxidplättchen, Graphitplättchen, Liquid Crystal Polymers (LCPs), holographische Pigmente, BiOCl-Plättchen oder Gemische der genannten Plättchen. Die Metallplättchen können unter anderem aus Aluminium, Titan, Bronze, Stahl oder Silber bestehen, vorzugsweise aus Aluminium oder Titan. Die Metallplättchen können dabei durch entsprechende Behandlung passiviert sein.

Bevorzugt sind Plättchen aus synthetischem oder natürlichem Glimmer, Glasplättchen, $SiO_2$-Plättchen und $Al_2O_3$-Plättchen, insbesondere synthetische oder natürliche Glimmerplättchen, Glasplättchen sowie $Al_2O_3$-Plättchen.

Der plättchenförmige Pigmentträger ist auf einer oder beiden Oberflächen (Ober- und Unterseite des Plättchens) mit einer oder mehreren, transparenten, semitransparenten oder opaken Schichten enthaltend Metalloxide, Metalloxidhydrate, Metallsuboxide, Metalle, Metallfluoride, Metallnitride, Metalloxynitride oder Mischungen dieser Materialien beschichtet. Bevorzugt ist das Trägerplättchen von diesen Schichten umhüllt. Dabei ist es erfindungsgemäß wesentlich, dass die äußere Schicht auf dem Trägerplättchen aus einem nichtmetallischen, anorganischen Material besteht, welches aus den genannten nichtmetallischen Materialien ausgewählt ist.

Die Metalloxid-, Metalloxidhydrat-, Metallsuboxid-, Metall-, Metallfluorid-, Metallnitrid-, Metalloxynitridschichten oder die Mischungen hieraus können niedrigbrechend (Brechzahl < 1,8) oder hochbrechend (Brechzahl ≥ 1,8; bevorzugt von ≥ 2,0.) sein. Als Metalloxide und Metalloxidhydrate eignen sich alle dem Fachmann bekannten Metalloxide oder Metalloxidhydrate, wie z. B. Aluminiumoxid, Aluminiumoxidhydrat, Siliziumoxid, Siliziumoxidhydrat, Eisenoxide, Zinnoxid, Ceroxid, Zinkoxid, Zirkoniumoxid, Chromoxid, Titanoxid, insbesondere Titandioxid in der Rutil- oder Anatas-Modifikation, Titanoxidhydrat sowie Mischungen oder Mischoxide aus den vorab genannten Materialien, wie z.B. Ilmenit oder Pseudobrookit. Als Metallsuboxide können beispielsweise die Titansuboxide eingesetzt werden. Als Metalle, die für Zwischenschichten eingesetzt werden können, eignen sich z.B. Chrom, Aluminium, Nickel, Silber, Gold, Titan, Kupfer oder Legierungen, als Metallfluorid eignet sich beispielsweise Magnesiumfluorid. Als Metallnitride oder Metalloxynitride können beispielsweise die Nitride oder Oxynitride der Metalle Titan, Zirkonium und/oder Tantal eingesetzt werden. Bevorzugt werden Metalloxid-, Metall-, Metallfluorid und/oder Metalloxidhydratschichten und ganz besonders bevorzugt Metalloxid- und/oder Metalloxidhydratschichten auf das Substrat aufgebracht, wobei für die äußere Schicht Metalloxid-, Metallfluorid und/oder Metalloxidhydratschichten ausgewählt werden. Insbesondere bevorzugt sind Oxide und/oder Oxidhydrate des Aluminiums, Siliziums, Eisens, Zinns und Titans oder Mischoxide oder Gemische aus mindestens zwei der vorab Genannten.

Es können auch Mehrschichtaufbauten aus hoch- und niedrigbrechenden Metalloxid-, Metalloxidhydrat-, Metall- oder Metallfluoridschichten vorliegen, wobei sich vorzugsweise hoch- und niedrigbrechende Schichten miteinander abwechseln. Insbesondere bevorzugt sind Schichtpakete aus einer hochbrechenden Schicht (Brechzahl ≥ 1,8) und einer niedrigbrechenden Schicht (Brechzahl < 1,8), wobei auf dem Trägerplättchen eines oder mehrere dieser Schichtpakete aufgebracht sein können. Die Reihenfolge der hoch- und niedrigbrechenden Schichten kann dabei an das Material des Trägerplättchens angepasst werden, um letzteres in den Mehrschichtaufbau mit einzubeziehen.

Die Metalloxid-, Metalloxidhydrat-, Metallsuboxid-, Metall-, Metallfluorid-, Metallnitrid-, Metalloxynitridschichten können auch mit Farbmitteln oder anderen Elementen versetzt oder dotiert sein. Als Farbmittel oder andere Elemente eignen sich beispielsweise anorganische Farbpigmente wie farbige Metalloxide, z.B. Magnetit, Chromoxid oder Farbpigmente wie z.B. Berliner Blau, Ultramarin, Bismutvanadat, Thenards Blau, als Dotierelemente sind Elemente wie z.B. Yttrium, Magnesium, Aluminium oder Antimon geeignet.

Erfindungsgemäß besteht die äußere Schicht auf dem beschichteten Trägerplättchen aus einem nichtmetallischen, anorganischen Material. Von den vorab genannten Materialien sind für die äußere Schicht insbesondere Titandioxid, sowohl in der Rutil- als auch in der Anatasemodifikation, Eisen (III)oxid in jeder der möglichen Kristallmodifikationen als auch Gemische oder Mischoxide aus $TiO_2$ und $Fe_2O_3$, oder auch $Fe_3O_4$, besonders geeignet, sofern es sich bei der äußeren Schicht um eine so genannte optisch aktive Schicht handelt, also eine solche Schicht, die eine Brechzahl und Schichtdicke aufweist, bei denen die Schicht einen eigenständigen Beitrag zur Interferenz- und/oder Absorptionsfarbe der Pigmente liefern kann. Besteht die äußere Schicht jedoch aus einer so genannten anorganischen Nachbeschichtung, welche fachüblich auf Effektpigmente zur Verbesserung ihrer chemischen Stabilität und/oder zur Erleichterung der Einarbeitung der Pigmente in das Anwendungsmedium aufgebracht wird, sind bevorzugte Materialien für die äußere Schicht $SiO_2$, $Al_2O_3$, $ZrO_2$, $Ce_2O_3$ oder deren Oxidhydrate. Solche Nachbeschichtungen werden in Schichtdicken von nur wenigen Nanometern aufgebracht, so dass sie keinen eigenständigen Beitrag zur Interferenz- und/oder Absorptionsfarbe der Pigmente liefern.

Effektpigmente enthaltend Schichten aus den vorab genannten Materialien zeigen eine hohe Farbenvielfalt in Bezug auf ihre Körperfarbe, meist kräftige Interferenzfarben und können in vielen Fällen eine winkelabhängige Änderung der Interferenzfarbe zeigen (optisch variables Verhalten).

Pigmente des vorab beschriebenen Aufbaus werden fachgemäß, abhängig von ihrem konkreten Aufbau, als Perlglanzpigmente, Interferenzpigmente, Metalleffektpigmente oder optisch variable Pigmente bezeichnet.

Erfindungsgemäß bevorzugt eingesetzte Effektpigmente für die erste Flächeneinheit haben den folgenden Aufbau (A), (B) oder (C), wobei der Ausdruck $TiO_2/Fe_2O_3$ eine Schicht bedeutet, die $TiO_2$ und $Fe_2O_3$ als Mischung oder als Mischoxid, z. B. Pseudobrookit, enthält. Oxide in Klammern sind optional. Zur Rutilisierung von Titandioxid wird bevorzugt eine Zinndioxidschicht unter einer Titandioxidschicht aufgebracht.

(A):

Substratplättchen + ($SiO_2$) + $TiO_2$ (Rutil)
Substratplättchen + ($SiO_2$) + $SiO_2$ + $TiO_2$ (Rutil)
Substratplättchen + ($SiO_2$) + $TiO_2$ (Rutil) + $SiO_2$ + $TiO_2$ (Rutil)
Substratplättchen + ($SiO_2$) + $TiO_2$ (Anatas) + $SiO_2$ + $TiO_2$ (Anatas)
Substratplättchen + ($SiO_2$) + $TiO_2/Fe_2O_3$ + $SiO_2$ + $TiO_2$ + $TiO_2/Fe_2O_3$
Substratplättchen + ($SiO_2$) + $TiO_2/Fe_2O_3$ + $SiO_2$ + $TiO_2/Fe_2O_3$
Substratplättchen + ($SiO_2$) + $Fe_2O_3$
Substratplättchen + ($SiO_2$) + $Fe_3O_4$ + $SiO_2$ + $TiO_2$

Besonders bevorzugt sind Effektpigmente mit der folgenden Struktur:

(B):

Glimmer oder $Al_2O_3$-Plättchen + ($SnO_2$) + $TiO_2$
Glimmer oder $Al_2O_3$-Plättchen + $Fe_2O_3$
Glimmer oder $Al_2O_3$-Plättchen + $Fe_2O_3$ (dotiert mit Mg)
Glimmer oder $Al_2O_3$-Plättchen + $Fe_3O_4$
Glimmer oder $Al_2O_3$-Plättchen + $Fe_3O_4$ + $SiO_2$ + $TiO_2$
Glimmer oder $Al_2O_3$-Plättchen + $Fe_3O_4$ (dotiert mit Al) + $SiO_2$ + $TiO_2$
Glimmer oder $Al_2O_3$-Plättchen + $TiO_2/Fe_2O_3$
Glimmer oder $Al_2O_3$-Plättchen + ($SnO_2$) + $TiO_2$ + $SiO_2$ + $TiO_2$
Glimmer oder $Al_2O_3$-Plättchen + $TiO_2/Fe_2O_3$
Glimmer oder $Al_2O_3$-Plättchen + $TiO_2/Fe_2O_3$ + $SiO_2$ + $TiO_2$
Glimmer oder $Al_2O_3$-Plättchen + $TiO_2/Fe_2O_3$ + $SiO_2$ + $TiO_2/Fe_2O_3$
Glimmer oder $Al_2O_3$-Plättchen + $TiO_2/Fe_2O_3$ + $SiO_2$ + $SnO_2+TiO_2+TiO_2/Fe_2O_3$
Glimmer oder $Al_2O_3$-Plättchen + $TiO_2/Fe_2O_3$ + $SiO_2$ + $TiO_2$ + $TiO_2/Fe_2O_3$
Glimmer oder $Al_2O_3$-Plättchen + ($SnO_2$) + $TiO_2$ + $SiO_2$ + $TiO_2/Fe_2O_3$

Glimmer oder $Al_2O_3$-Plättchen + $TiFe_2O_5$
Glasplättchen oder $SiO_2$- Plättchen + $(SiO_2)$ + $Fe_2O_3$
Glasplättchen oder $SiO_2$- Plättchen + $(SiO_2)$ + $TiO_2$
Glasplättchen oder $SiO_2$- Plättchen + $SiO_2$ + $TiO_2$
Glasplättchen oder $SiO_2$- Plättchen + $SiO_2$ + $TiO_2$ + $SiO_2$
Glasplättchen oder $SiO_2$- Plättchen + $(SiO_2)$ + $TiO_2$ + $SiO_2$ + $TiO_2$
Glasplättchen oder $SiO_2$- Plättchen + $(SiO_2)$ + $TiO_2/Fe_2O_3$
Glasplättchen oder $SiO_2$- Plättchen + $(SiO_2)$ + $TiO_2/Fe_2O_3$ + $SiO_2$ + $TiO_2$
Glasplättchen oder $SiO_2$- Plättchen + $(SiO_2)$ + $TiO_2/Fe_2O_3$ + $SiO_2$ + $TiO_2/Fe_2O_3$
Glasplättchen oder $SiO_2$- Plättchen + $(SiO_2)$ + $TiO_2/Fe_2O_3$ + $SiO_2$ + $TiO_2$ + $TiO_2/Fe_2O_3$
Glasplättchen oder $SiO_2$- Plättchen + $(SiO_2)$ + $TiO_2$ + $SiO_2$ + $TiO_2/Fe_2O_3$
Glasplättchen oder $SiO_2$- Plättchen + $(SiO_2)$ + $TiFe_2O_5$

Insbesondere bevorzugt sind Effektpigmente mit der folgenden Struktur:

(C):

$Al_2O_3$-Plättchen + $TiO_2/Fe_2O_3$ + $SiO_2$ + $TiO_2$
$Al_2O_3$-Plättchen + $TiO_2/Fe_2O_3$ + $SiO_2$ + $TiO_2$+ $TiO_2/Fe_2O_3$
$Al_2O_3$-Plättchen + $TiO_2/Fe_2O_3$ + $SiO_2$ + $SnO_2$ + $TiO_2$+ $TiO_2/Fe_2O_3$
$Al_2O_3$-Plättchen + $SnO_2$ + $TiO_2/Fe_2O_3$ + $SiO_2$ + $SnO_2$ + $TiO_2$+ $TiO_2/Fe_2O_3$
$Al_2O_3$-Plättchen + $Fe_2O_3$
$Al_2O_3$-Plättchen + $Fe_2O_3$ (dotiert mit Mg)
$Al_2O_3$-Plättchen + $Fe_3O_4$ + $SiO_2$ + $TiO_2$
$Al_2O_3$-Plättchen + $Fe_3O_4$ (dotiert mit Al) + $SiO_2$ + $TiO_2$

Bedingt durch die stoffliche Zusammensetzung der verschiedenen Schichten weisen die vorab genannten Effektpigmente oft nicht nur optisch erkennbare Effekte wie Interferenzfarben, Absorptionsfarben oder optisch variable Effekte auf, sondern können darüber hinaus auch magnetische, magnetisierbare, sowie gegebenenfalls bei geigneter Materialauswahl, Dotierung und Schichtdicke intrinsische oder direkte elektrisch leitfähige, IR- oder UV-absorbierende oder auch unter verschiedenen Bedingungen lumineszierende Eigenschaften aufweisen.

Die Schichten aus Metalloxiden, -hydroxiden und/oder -oxidhydraten werden vorzugsweise nasschemisch auf die entsprechenden Trägerplättchen aufgebracht, wobei die zur Herstellung von Effektpigmenten entwickelten nasschemischen Beschichtungsverfahren angewendet werden können, die zu einer Umhüllung des Substrats führen. Nach der nasschemischen Aufbringung können die Substanzen als Oxide, Hydroxide und/oder Oxidhydrate vorliegen.

Anschließend werden die beschichteten Produkte abgetrennt, gewaschen, getrocknet und bevorzugt kalziniert. Die bei der nasschemischen Aufbringung gebildeten Oxide, Hydroxide und/oder Oxidhydrate werden dadurch in die entsprechenden Oxide und/oder Mischoxide überführt. Die Trocknung kann bei Temperaturen von 50-150 °C für üblicherweise ≥10 Minuten, ggf. für 6-18 Stunden, erfolgen. Die Kalzinierung kann bei Temperaturen von 250-1000°C, vorzugsweise bei 400-950°C, für üblicherweise 0,5 - 3 Stunden erfolgen.

Die Größe der verwendeten Effektpigmente ist für das erfindungsgemäße Druckbild nur insofern kritisch, als die verwendeten Effektpigmente in Bezug auf ihre Größe für Druckverfahren geeignet sein müssen. Ihre Ausdehnung in Länge bzw. Breite liegt daher üblicherweise im Bereich von 1-200 $\mu$m, insbesondere im Bereich von 1-150 $\mu$m und besonders bevorzugt im Bereich von 5-60 $\mu$m. Die Dicke der Pigmente beträgt üblicherweise zwischen 0,05 und 5 $\mu$m, insbesondere zwischen 0,1 und 4,5 $\mu$m. Der Formfaktor der Pigmente (aspect ratio: Verhältnis Durchmesser zu Dicke) beträgt mindestens 2 und liegt insbesondere im Bereich von 5 bis 300, besonders bevorzugt im Bereich von 20 bis 200. Je nach eingesetztem Druckverfahren werden die entsprechenden Größen der Effektpigmente fachgemäß so ausgewählt, dass eine unproblematische Verdruckung möglich ist.

Die für die erste Flächeneinheit gemäß der vorliegenden Erfindung eingesetzten Effektpigmente lassen sich problemlos in Druckfarben einarbeiten und weisen im jeweiligen Teil des erfindungsgemäßen Druckbildes keine Leafing-Eigenschaften auf, d.h. ordnen sich statistisch verteilt in der Druckschicht und nicht bevorzugt an deren Oberfläche an.

Die zweite Flächeneinheit des erfindungsgemäßen Druckbildes enthält Effektpigmente (das zweite Effektpigment), die auf beschichteten Trägerplättchen basieren und eine äußere Schicht aus einem organischen Oberflächenmodifizierungsmittel aufweisen. Die Art der Trägerplättchen und der sich darauf befindlichen ersten Beschichtungen unterscheidet sich in keiner Weise vom Aufbau der für die erste Flächeneinheit verwendeten ersten Effektpigmente. Alle vorab genannten Trägerplättchen, Beschichtungsmaterialien und Schichtreihenfolgen können ebenfalls verwendet werden.

Auch das für die zweite Flächeneinheit verwendete zweite plättchenförmige Effektpigment weist direkt unterhalb der äußeren Schicht aus einem organischen Modifizierungsmittel eine Schicht aus einem nichtmetallischen, anorganischen Material auf.

Bis auf die äußere Schicht aus einem organischen Modifizierungsmittel, die die für die zweite Flächeneinheit verwendeten Pigmente aufweisen, unterscheiden sich diese in der Art und Zusammensetzung vorzugsweise praktisch nicht von den für die erste Flächeneinheit verwendeten Effektpigmenten. Es kann jedoch auch vorteilhaft sein, wenn in beiden Flächeneinheiten Effektpigmente verwendet werden, deren optische und ggf. funktionelle Eigenschaften voneinander abweichen, wenn also beispielsweise gleichfarbige erste und zweite Effektpigmente mit verschiedenen funktionellen Eigenschaften oder verschiedenfarbige erste und zweite Effektpigmente verwendet werden.

In einer besonders bevorzugten Ausführungsform der vorliegenden Erfindung unterscheiden sich das erste und zweite Effektpigment jedoch lediglich durch die äußere Schicht aus einem organischen Oberflächenmodifizierungsmittel auf dem zweiten plättchenförmigen Effektpigment. Das bedeutet, dass die Absorptionsfarbe, sofern vorhanden, die Interferenzfarbe sowie ggf. ein optisch variabler Effekt durch winkelabhängig verschiedene Interferenzfarben bei beiden Effektpigmenten übereinstimmt und diese in Bezug auf Materialien, Schichtreihenfolgen und -dicken sowie Partikelgröße ansonsten identisch sind. Auch die ggf. vorhandenen funktionellen Eigenschaften stimmen überein. Damit unterscheiden sich hier die erste und zweite Flächeneinheit lediglich durch einen verschiedenen Reflexionsgrad beider Flächeneinheiten, ausgedrückt durch einen unterschiedlichen Flop Index.

Bei der für das zweite Effektpigment als äußere Schicht verwendeten Beschichtung handelt es sich vorzugsweise um eine Schicht, welche als organisches Oberflächenmodifizierungsmittel organofunktionelle Siloxane enthält. Diese können allein oder im Gemisch mit organofunktionellen Silanen vorliegen.

Es hat sich als besonders vorteilhaft herausgestellt, wenn die organofunktionellen Siloxane, wobei es sich insbesondere um Oligo- und/oder Polysiloxane handelt, als funktionelle Gruppen primäre oder sekundäre Aminogruppen und Fluoralkylgruppen enthalten, insbesondere Aminoalkylgruppen und Fluoralkylgruppen aufweisen. Diese können in einem Siloxangemisch separat an verschiedenen Siloxanen vorhanden sein, befinden sich jedoch bevorzugt an ein und demselben Siloxanmolekül, respektive Oligo- oder Polysiloxanmolekül. Das molare Verhältnis der Fluoralkylgruppen zu den Aminogruppen, insbesondere Aminoalkylgruppen, beträgt dabei 1:2 bis 5:1, vorzugsweise 2:1 bis 5:1 und insbesondere 3:1 bis 5:1.

Dabei sind Oligo- oder Polysiloxane mit C1-C4-Aminoalkylgruppen, insbesondere mit C1-C2-Aminoalkylgruppen, bevorzugt. Bevorzugte Oligo- oder Polysiloxane mit Fluoralkylgruppen enthalten C1-C20, insbesondere C1-C10, besonders bevorzugt C2-C6, Fluoralkylgruppen. Insbesondere bevorzugt sind jedoch Oligo- oder Polysiloxane, die C2-C6-Fluoralkylgruppen, bevorzugt perfluorierte Gruppen, sowie gleichzeitig C1-C2-Aminoalkylgruppen enthalten. Optional können letztere noch zusätzlich Alkoxygruppen, vorzugsweise Methoxy- oder Ethoxygruppen und/oder Hydroxylgruppen enthalten. Besonders bevorzugt ist die Verwendung von Oligo- oder Polysiloxanen mit den vorab bevorzugt genannten Fluor- und Aminoalkylgruppen und mindestens einer Hydroxylgruppe zur Anbindung an die Pigmentoberfläche.

In der äußeren Beschichtung der für die zweite Flächeneinheit verwendeten Effektpigmente können einige oder alle der organofunktionellen Gruppen zur Anbindung an die darunter liegende nichtmetallische, anorganische Oberfläche abreagiert sein. Die Siloxane werden dabei über SilanolGruppen (Si-OH) chemisch an die Oberfläche der Effektpigmente gebunden, wobei eine Ankopplung Si-O-Effektpigment stattfindet. Werden Polysiloxane ausgewählt, die Aminoalkylgruppen und gleichzeitig Fluoralkylgruppen enthalten, bildet sich durch Quervernetzung anschließend ein zwei- und dreidimensionales Siloxan-Netzwerk auf der Pigmentoberfläche aus, welches zu einer chemisch, thermisch und mechanisch beständigen Beschichtung führt.

Während die Aminoalkyl-Gruppen die Wasserlöslichkeit der Siloxane beim Beschichtungsvorgang ermöglichen, setzen die Fluoralkyl-Gruppen die Oberflächenenergie der Pigmente sehr stark herab.

Die auf diese Weise behandelten Effektpigmente zeigen eine gleichermaßen gute Hydro- und Oleophobie, so dass nach dem Bedrucken des Substrates in den üblichen Bindemitteln ein Leafing-Effekt beobachtet werden kann, d.h. die Effektpigmente reichern sich an der Oberfläche der noch feuchten Druckschicht an und orientieren sich dort parallel zum Substrat. Es kommt daher zu einer deutlich erhöhten Reflexion an der Oberfläche der so bedruckten Flächeneinheit.

Wegen der geringen Oberflächenenergie dieser Effektpigmente wird jedoch auch ein hervorragendes Benetzungsverhalten des pigmentierten Bindemittels auf den zu bedruckenden Materialien ermöglicht. Gleichzeitig ist in überraschender Weise keine nennenswerte Entmischung von Bindemittel und Effektpigment in der entsprechenden Druckfarbe zu beobachten, so dass die üblichen Druckverfahren problemlos durchführbar sind.

Die erfindungsgemäß verwendeten Silane und Siloxane sind z. B. unter dem Handelsnamen Dynasylan® (Evonik) kommerziell erhältlich. Insbesondere bevorzugt sind Mischungen aus Dynasylan® F 8261 (1 H, 1 H,2H,2H-Perfluorooctyltriethoxysilane) mit Dynasylan® AMEO (Aminopropyltriethoxysilan) oder Dynasylan DAMO (N-(2-Aminoethyl)-3-aminopropyltrimethoxysilan), oder die alleinige Verwendung von Dynasylan® F 8815. Letzteres ist besonders bevorzugt.

Die Aufbringung des Oberflächenmodifizierungsmittels auf die Oberfläche der Effektpigmente kann durch einfaches Mischen der Effektpigmente und des unverdünnten Oberflächenmodifizierungsmittels in einem geeigneten Mischer erfolgen, wird aber vorzugsweise durch Mischen der Effektpigmente mit dem in einem Lösemittel gelösten Oberflächenmodifizierungsmittel bei Temperaturen oberhalb von 50°C durchgeführt. Als Lösemittel eignen sich organische Lösemittel, Wasser oder Mischungen hieraus. Bevorzugt wird Wasser verwendet. Die für die Aufbringung der organischen Beschichtung nötige Reaktionszeit liegt bei mindestens 5 Minuten, erfolgt jedoch vorzugsweise in einem Zeitraum von 10 bis 90 Minuten. Bei Bedarf kann die Reaktionszeit aber beliebig verlängert werden. Das beschichtete Pigment wird dann nach fachüblichen Methoden aufgearbeitet und isoliert, z. B. durch Filtration, Trocknung und Siebung.

Die in dieser Weise beschichteten Pigmente weisen eine Oberflächenenergie von $\leq 50$ mN/m, bevorzugt von $\leq 20$ mN/m, auf. Insbesondere Effektpigmente mit einer Oberflächenenergie von $\leq 10$ mN/m sind bevorzugt. Die Schichtdicke der aufgebrachten äußeren Schicht aus einem organischen Oberflächenmodifizierungsmittel liegt im Bereich von 2 bis 5 nm.

Vorzugsweise enthalten die erste und zweite Flächeneinheit des erfindungsgemäßen Druckbildes als plättchenförmige Effektpigmente ausschließlich die vorab beschriebenen plättchenförmigen Effektpigmente und keine weiteren, anderen Effektpigmente.

Pigmentartige Füllstoffe und/oder absorbierende Farbmittel, die organischen oder anorganischen Ursprung haben können, können jedoch bei Bedarf in der ersten und zweiten Flächeneinheit des erfindungsgemäßen Druckbildes ebenfalls vorhanden sein, solange das gewünschte Reflexionsverhalten der beiden Flächeneinheiten nicht maßgeblich behindert wird.

Als Bindemittel für die erste und zweite Flächeneinheit des erfindungsgemäßen Druckbildes können die üblichen, in Druckfarben gebräuchlichen Bindemittel eingesetzt werden. Beispielsweise können Bindemittel für Druckfarben auf Nitrocellulosebasis, Polyamidbasis, Acrylbasis, Polyvinylbutyralbasis, PVC-Basis, PUR-Basis oder geeignete Gemische aus diesen eingesetzt werden. Insbesondere geeignet und daher bevorzugt sind jedoch Bindemittel auf UV-härtender Basis (radikalisch oder kationisch härtend).

Es versteht sich von selbst, dass das erfindungsgemäße Druckbild mittels einer Druckfarbe in einem üblichen Druckverfahren auf das Substrat aufgebracht wird. Vorzugsweise handelt es sich bei der Druckfarbe um eine Siebdruckfarbe, eine Tiefdruckfarbe, eine Flexodruckfarbe oder eine Intagliodruckfarbe.

Üblicherweise enthalten Druckfarben auch Lösemittel. Das können organische Lösemittel und/oder Wasser sein. Aus umweltschonender und anwendungstechnischer Perspektive sind hier wässrige Druckfarben bevorzugt. Organische Lösemittel können verzweigte und unverzweigte Alkohole, Aromaten und Alkylester, wie z. B. Ethanol, 1-Methoxy-Propanol, 1-Ethoxy-2-Propanol, Ethylacetat, Butylacetat oder Toluol sein. Besonders bevorzugt sind jedoch wie oben bereits erwähnt UV-härtende Druckfarben, deren Lösemittelanteil gering oder praktisch nicht vorhanden ist.

Außer einem Bindemittel und den erfindungsgemäß eingesetzten plättchenförmigen Effektpigmenten kann die entsprechende Druckfarbe noch die üblichen weiteren Bestandteile wie Hilfs- und/oder Zusatzstoffe enthalten. Diese werden fachgemäß eingesetzt und unterscheiden sich nicht von den üblicherweise für Druckfarben eingesetzten Materialien.

Beispielsweise seien hier Netzmittel, Gleitmittel, Antiblockmittel, Haftvermittler, Trocknungsbeschleuniger und Fotoinitiatoren genannt.

Die genannten Hilfsstoffe, sofern es sich um Feststoffe handelt und falls sie in der Druckfarbe vorhanden sind, sind in der Regel nach dem Verfestigen der Druckfarbe auf dem Substrat neben den Effektpigmenten und dem Bindemittel auch auf den entsprechenden Flächeneinheiten vorhanden. Dies trifft selbstverständlich auf die ggf. in der Druckfarbe eingesetzten Lösemittel nicht zu, die beim Verfestigen der Druckfarbe verdampfen oder anderweitig abgeführt werden. Daher ist der Gewichtsanteil der Effektpigmente in den jeweiligen Flächeneinheiten des erfindungsgemäßen Druckbildes auch höher als in der jeweils verwendeten Druckfarbe und liegt im Bereich zwischen 1 und 40 Gew.%, vorzugsweise von 10 bis 40 Gew.%, bezogen auf die verfestigte Druckschicht, respektive das Druckbild.

Bei dem erfindungsgemäß eingesetzten Substrat handelt es sich um Materialien, die üblicherweise bedruckt werden können. Beispielsweise zu nennen sind Papier, Pappe, Tapete, Tissue-Material, Polymere (als Körper oder Folie), Metall (als Körper oder Folie), Keramik, Glas, Holz, Textilmaterialien oder Verbundstoffe aus zwei oder mehreren der vorab genannten Materialien, z. B. Papierschicht-haltige Laminate. Es können auch gestrichene, kalandrierte und/oder satinierte Papiere oder Papiere und Folien, die mit Primerschichten beschichtet sind, eingesetzt werden. Insbesondere geeignet sind die Spezialpapiere und Polymerfolien, die gewöhnlich für die Herstellung von Wertdokumenten und Banknoten eingesetzt werden, besonders bevorzugt Banknotenpapier. Da deren Zusammensetzung dem Fachmann bekannt ist, muss hier nicht ausführlich darauf eingegangen werden. Es hat sich bei vergleichsweise geringen Druckschichtdicken als besonders vorteilhaft herausgestellt, wenn die bedruckten Substrate eine eher glatte Oberfläche aufweisen.

Insgesamt ist es wesentlich, dass Bindemittel, Menge und Art des ggf. verwendeten Lösemittels sowie der Bedruckstoff (Substrat) so aufeinander abgestimmt werden, das sich in der zweiten Flächeneinheit der beabsichtigte Leafing-Effekt ausbilden kann. Dazu ist eine geeignete Schichtdicke der noch feuchten Druckschicht, eine vergleichsweise lange Standzeit der feuchten Druckfarbe auf dem Substrat sowie eine geeignete Oberflächenqualität des Substrates erforderlich. Während bei hohen Schichtdicken der feuchten Druckschicht auch sehr saugfähige Substrate eingesetzt werden können, erfordern Druckverfahren, die nur geringe Schichtdicken erzeugen, glattere Oberflächen und möglichst die Verwendung von UV-härtenden Bindemitteln. Die Auswahl der jeweiligen Bedingungen beruht auf den Fachkenntnissen des jeweiligen Druckfachmannes und erfordert kein erfinderisches Zutun.

Die Nassschichtdicke der aufgebrachten Druckschicht liegt erfindungsgemäß im Bereich von 3 bis 200 $\mu$m, vorzugsweise von 10 bis 100 $\mu$m, was Trockenschichtdicken von ca. 1 bis 150 $\mu$m, respektive 3 bis 80 $\mu$m, entspricht.

In einer besonders bevorzugten Ausführungsform der vorliegenden Erfindung weist das erfindungsgemäße Druckbild zusätzlich eine Lasermarkierung auf. Diese kann, je nach stofflicher Zusammensetzung der jeweils eingesetzten Effektpigmente und der verwendeten Laserapparatur, aus einer ablatierten Markierung auf dem Druckbild oder einer dunklen bis schwarz gefärbten Lasermarkierung im Druckbild bestehen. Es hat sich in überraschender Weise herausgestellt, dass die organische Oberflächenbeschichtung auf den Effektpigmenten der zweiten Flächeneinheit das Absorptionsverhalten der Effektpigmente unter Laserbestrahlung nicht beeinträchtigt.

Bei einer Laserablation wird die gesamte Pigmentschicht an den vom Laser bestrahlten Flächen vom Substrat entfernt, ohne dass sich das Substrat selbst verfärbt.

Bei einer dunklen Lasermarkierung werden die Effektpigmente an den Laser-beaufschlagten Stellen abhängig von den eingestellten Laserparametern entweder vollständig erhalten oder aber vollständig oder auch lediglich teilweise aus dem Druckbild entfernt, wobei es jedoch in allen Fällen zusätzlich durch thermische Belastung des Substrates noch zu einer Dunkelfärbung des Substrates (Bedruckstoff) kommt.

Die Lasermarkierung kann sich dabei auf nur einer der Flächeneinheiten oder auch auf beiden Flächeneinheiten gleichzeitig befinden. Vorzugsweise ist sie als zusammenhängende Markierung über beide Flächeneinheiten angeordnet. Dabei ergibt sich eine nahtlose, homogene, gut kontrastierende Markierung, die völlig unabhängig vom Reflexionsgrad der jeweiligen Flächeneinheit ist.

Geeignete Laser können Festkörperlaser wie YAG/NdVO$_4$-Laser mit einer Wellenlänge von 1064 nm, 532 nm und 355 nm bzw. Gaslaser (z.B. CO$_2$-Laser) mit einer Wellenlänge von 9,1 $\mu$m, 9,3 $\mu$m und 10,6 $\mu$m sein.

Gegenstand der vorliegenden Erfindung ist auch ein Verfahren zur Herstellung eines Druckbildes, wobei eine erste Druckfarbe, enthaltend ein erstes plättchenförmiges Effektpigment, welches auf einem beschichteten Trägerplättchen basiert und eine äußere Schicht aus einem nichtmetallischen, anorganischen Material aufweist, und ein Bindemittel, auf ein Substrat unter Bildung einer ersten Flächeneinheit eines Druckbildes aufgebracht und verfestigt wird, und wobei eine zweite Druckfarbe, enthaltend ein zweites plättchenförmiges Effektpigment, welches auf einem beschichteten Trägerplättchen basiert und eine äußere Schicht aus einem organischen Oberflächenmodifizierungsmittel aufweist, und ein Bindemittel, auf ein Substrat unter Bildung einer zweiten Flächeneinheit eines Druckbildes aufgebracht und verfestigt wird.

Als Druckfarben werden die in den gängigen Druckverfahren üblicherweise verwendeten Druckfarben eingesetzt mit der Maßgabe, dass die Druckfarbe für die erste Flächeneinheit ein erstes plättchenförmiges Effektpigment enthält, welches auf einem beschichteten Trägerplättchen basiert und eine äußere Schicht aus einem nichtmetallischen, anorganischen Material aufweist, und die zweite Druckfarbe für die zweite Flächeneinheit ein zweites plättchenförmiges Effektpigment enthält, welches ebenfalls auf einem beschichteten Trägerplättchen basiert und eine äußere Schicht aus einem organischen Oberflächenmodifizierungsmittel aufweist.

Auf die nicht-funktionalisierten und organisch funktionalisierten plättchenförmigen Effektpigmente sowie die weiteren üblichen Druckfarbenbestandteile ist vorab bereits eingegangen worden. Die diesbezüglichen Ausführungen treffen hier ebenfalls zu. In der Regel werden Druckfarbenvehikel, die außer den nötigen Farb- oder Effekt-gebenden Pigmenten und ggf. zusätzlichen viskositätsbestimmenden Mengen an Lösemittel bereits alle üblichen Druckfarbenbestandteile enthalten, von den jeweiligen Herstellern gebrauchsfertig angeboten. Es werden erfindungsgemäß besonders bevorzugt solche Druckfarben eingesetzt, die UV-härtend sind und damit einen nur geringen oder gar keinen Lösemittelanteil aufweisen.

Die jeweiligen, mit den verschiedenen plättchenförmigen Effektpigmenten pigmentierten Druckfarben für die erste und zweite Flächeneinheit werden gemäß der vorliegenden Erfindung mittels üblicher Druckverfahren auf das Substrat aufgebracht. Als Druckverfahren kommen hier insbesondere ein Siebdruckverfahren, ein Tiefdruckverfahren, ein Flexodruckverfahren oder ein Intagliodruckverfahren (spezielles Tiefdruckverfahren mit pastösen Druckfarben und hoher Schichtdicke) in Betracht. Andere übliche Druckverfahren können ebenfalls eingesetzt werden, solange die vorab beschriebenen Anforderungen in Bezug auf die Wechselwirkung von Bindemittel, Lösemittel und Substrat erfüllt werden können, so dass sich der beabsichtigte Leafing-Effekt in der zweiten Flächeneinheit des Druckbildes einstellen kann.

Besonders bevorzugt wird ein Siebdruckverfahren eingesetzt.

Die Druckfarbe wird dabei fachgemäß auf das zu beschichtende Substrat aufgebracht und verfestigt. Dabei kann der Verfestigungsvorgang ein physikalischer Trocknungsprozess sein, wird jedoch vorzugsweise durch die Zufuhr von Wärme und/oder UV-Licht unterstützt. Insbesondere bevorzugt werden UV-härtende Systeme eingesetzt.

Übliche Druckverfahren an sich geben bereits eine mechanisch ausgelöste Orientierung der Pigmente parallel zur bedruckten Oberfläche in einem gewissen Grade vor. Dadurch werden die für die erste Flächeneinheit in der ersten Druckfarbe eingesetzten ersten plättchenförmigen Effektpigmente bereits weitestgehend parallel zur Oberfläche des Substrates ausgerichtet. Diese Ausrichtung erfolgt jedoch über das Volumen der gesamten Druckschicht hinweg, da die Effektpigmente homogen in der Druckfarbe und in der nassen Druckschicht verteilt sind. Durch die Beschichtung mit einem organischen Oberflächenmodifizierungsmittel wie vorab beschrieben haben jedoch die in der zweiten Druckfarbe für die zweite Flächeneinheit eingesetzten zweiten plättchenförmigen Effekpigmente zusätzlich das Bestreben, in der gedruckten, noch feuchten Schicht an die Oberfläche zu gelangen, ohne sich jedoch aus dem Bindersystem zu lösen. Dort richten sie sich parallel zum Substrat aus. Deshalb befindet sich, im Glanzwinkel betrachtet, eine sehr viel größere Anzahl von mit einer organischen Oberflächenbeschichtung beschichteten plättchenförmigen Effektpigmenten an der Oberfläche des Druckbildes in Reflexionsstellung als es beim Druck von unbeschichteten Pigmenten wie in der ersten Flächeneinheit der Fall ist.

Durch die Ausbildung des zwei- und dreidimensionalen Siloxan-Netzwerkes bei den erfindungsgemäß besonders bevorzugt verwendeten Fluoralkyl- und Aminoalkyl-funktionalisierten Oligo- oder Polysiloxanen wird ein ansonsten wesentlicher Nachteil üblicher Leafing-Beschichtungen von Effektpigmenten, der sich oft in der ungenügenden mechanischen Abriebfestigkeit der Pigmente auf der Oberfläche äußert, überwunden. Somit kann im Glanzwinkel der erhöhte Reflexionsgrad der die organisch funktionalisierten Pigmente enthaltenden Druckschicht bei gleichzeitig hoher chemischer, mechanischer und thermischer Beständigkeit der Druckschicht beobachtet werden. Außerhalb des Glanzwinkels erscheint diese Druckschicht dunkler als eine Druckschicht mit unbeschichteten Pigmenten, d.h. dunkler als die mit der ersten Druckfarbe bedruckte erste Flächeneinheit des erfindungsgemäßen Druckbildes, da nur noch wenige Pigmente nicht parallel zur Oberfläche ausgerichtet sind und in Detektionsrichtung außerhalb des Glanzwinkels reflektieren können.

Die erste und zweite Druckfarbe werden jeweils entweder einander unmittelbar benachbart auf das Substrat aufgebracht oder in solch einem geringen Abstand zueinander, dass bei Betrachtung mit dem bloßen Auge die erste und zweite Flächeneinheit des erfindungsgemäßen Druckbildes gleichzeitig optisch erfassbar sind. Es versteht sich von selbst, dass noch mehrere Flächeneinheiten, die aus der ersten oder zweiten Druckfarbe gebildet werden, auf das Substrat aufgebracht werden können. Die grafische Gestaltung des erfindungsgemäßen Druckbildes ist insofern nicht beschränkt, solange die erste und zweite Flächeneinheit wie oben beschrieben vorhanden sind und in ihren optischen und ggf. funktionellen Eigenschaften, zumindest aber in einem unterschiedlichen Reflexionsgrad, respektive Flop Index, wahrgenommen werden können. Die jeweiligen Flächeneinheiten müssen zu diesem Zwecke so groß sein, dass diese Unterscheidung möglich ist. Das ist in der Regel ab einer Größe der jeweils bedruckten Fläche von einigen Quadratmillimetern, beispielsweise ab etwa 4 mm$^2$, der Fall. Nach oben hin sind der Größe der bedruckten Flächeneinheiten praktisch keine Grenzen gesetzt, solange übliche Druckverfahren verwendet werden können.

In einer bevorzugten Ausführungsform der vorliegenden Erfindung werden die erste und/oder zweite Flächeneinheit nach der Verfestigung der Druckschicht noch zusätzlich mit einer Lasermarkierung versehen.

Wie bereits vorab beschrieben, behindert die organische Oberflächenmodifizierung der zweiten Effektpigmente in der zweiten Flächeneinheit das Laserabsorptionsvermögen der Effektpigmente nicht, da die organische Oberflächenmodifizierung lediglich eine sehr geringe Schichtdicke aufweist.

Mittels der üblicherweise für Lasermarkierungen verwendeten Laserapparaturen kann daher wahlweise auf der ersten und/oder zweiten Flächeneinheit des erfindungsgemäßen Druckbildes eine Lasermarkierung aufgebracht werden, bei der es sich um eine ablatierende oder dunkle bis schwarze Lasermarkierung handeln kann. Vorzugsweise erstreckt sich die Lasermarkierung jedoch über zumindest Teile der ersten und zweiten Flächeneinheit, wobei eine einheitliche Markierung erhältlich ist, bei der qualitativ zwischen der ersten und zweiten Flächeneinheit keine Unterschiede feststellbar sind.

Gegenstand der vorliegenden Erfindung ist auch die Verwendung des vorab beschriebenen Druckbildes als Dekorationselement, als Funktionselement oder als Sicherheitsmerkmal auf einem Produkt. Dabei wird der Hauptzweck der jeweiligen Verwendung durch die Art und den Aufbau der jeweils verwendeten plättchenförmigen Effektpigmente bestimmt. Eine Beschränkung von Substraten oder Produkten erfolgt lediglich über das Merkmal der Bedruckbarkeit mit üblichen Druckverfahren. Gemeinsames Merkmal bei allen möglichen Verwendungsarten ist jedoch das unterschiedliche Erscheinungsbild in Bezug auf den Reflexionsgrad der ersten und zweiten Teilflächen des erfindungsgemäßen Druckbildes, unabhängig davon, ob die Schichten noch jeweils über nicht-optische Funktionen verfügen oder nicht und welche Farbstellungen die jeweiligen Effektpigmente zeigen. Der unterschiedliche Reflexionsgrad der Flächeneinheiten äußert sich in auffälligen Matt-Glanz-Effekten des erfindungsgemäßen Druckbildes, wobei die erste Flächeneinheit einen eher matten und die zweite Flächeneinheit einen stark glänzenden optischen Eindruck vermittelt. Dabei entspricht der optische Eindruck der ersten Flächeneinheit dem eines üblichen Druckbildes, welches mit plättchenförmigen Effektpigmenten in der Druckfarbe erzeugt wird, d.h. dass dieser Teil des Druckbildes, für sich genommen und ohne Vergleichsmöglichkeit zur zweiten Teilfläche, abhängig von der Art der verwendeten Pigmente durchaus auch als "glänzend" wahrgenommen werden kann.

Besonders bevorzugt wird das erfindungsgemäße Druckbild zur Ausgestaltung von Sicherheitsprodukten eingesetzt, d.h. für Banknoten, Schecks, Kreditkarten, Aktien, Pässe, Ausweisdokumente, Führerscheine, Eintrittskarten, Wertmarken, Etiketten, Verpackungsmaterialien, Siegel und dergleichen. Besonders bevorzugt ist die Verwendung für den Banknotendruck, insbesondere wenn zusätzlich zu den optischen Merkmalen noch nicht-optische funktionelle Merkmale der eingesetzten Effektpigmente und/oder die oben beschriebene Lasermarkierung hinzukommen.

Mit dem erfindungsgemäßen Druckbild können auffällige Matt-Glanz-Effekte erzielt werden, die mittels üblicher Druckverfahren herstellbar, mit verschiedenen nicht-optischen Eigenschaften kombinierbar und vielseitig einsetzbar sind, ohne dass, in der einfachsten Ausführungsform, optisch und im Aufbau voneinander verschiedene Effektpigmente eingesetzt werden müssen. Während starke Glanzeffekte sich im Stand der Technik mit nichtmetallischen Effektpigmenten oft nur bei sehr großen Teilchengrößen der Effektpigmente erzielen lassen, die einer Anwendung in Druckverfahren meist nicht zugänglich sind, kann das erfindungsgemäße Druckbild auch bei Effektpigmenten mittlerer und geringer Partikelgrößen bereits zu auffälligen Glanzeffekten auf Teilflächen führen.

Die Erfindung soll nachfolgend an Hand von Beispielen erläutert, jedoch nicht auf diese beschränkt werden.

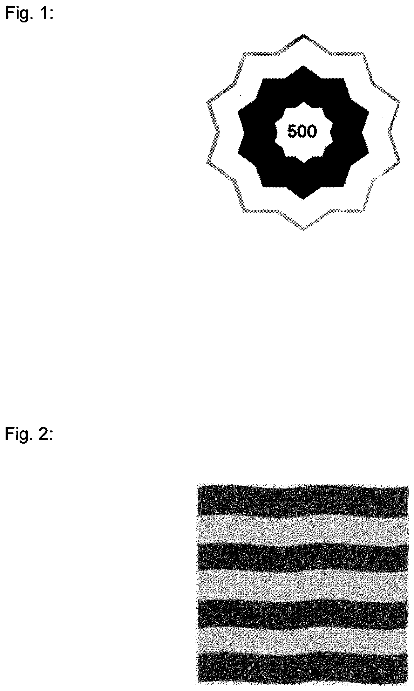

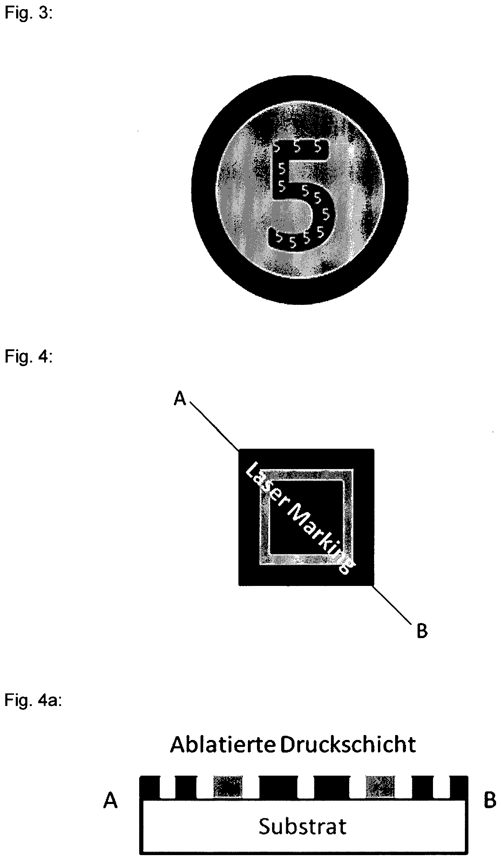

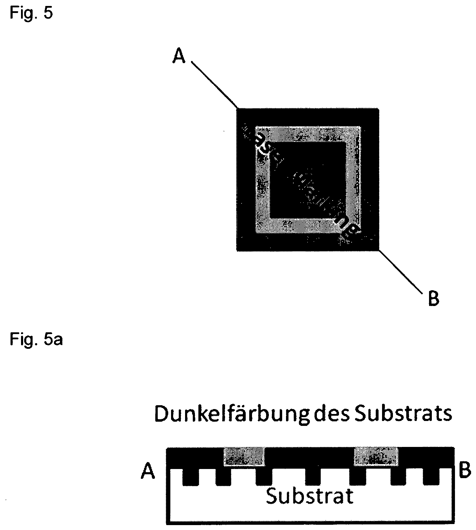

In den Figuren 1-5 sind verschiedene Designbeispiele des Druckbildes gemäß der vorliegenden Erfindung dargestellt. Die Figuren 4a und 5a zeigen Querschnitte entlang der jeweiligen Linie A-B der Figuren 4 und 5.

**Beispiel 1:**

Organische Oberflächenmodifizierung

In einem beheizbaren Mischer werden 1000 g Colorcrypt® Intaglio Gold (Produkt der Merck KGaA) mit 100 g Wasser vorbenetzt. Dazu werden 35 g Dynasylan® F8815 (Evonik) gegeben, gefolgt von 100 g einer 2,5%igen Ammoniak-Lösung. Der Ansatz wird 30 Minuten bei 60°C gemischt und bei 120°C von Wasser befreit. Anschließend wird das Produkt mit 63 $\mu$m Maschenweite gesiebt.

**Beispiel 2:**

Organische Oberflächenmodifizierung

Je 150 g Colorcrypt® M Silver, Colorcrypt® M Gold und Colorcrypt® M Bronze (Produkte der Merck KGaA) werden in 1,5 l Wasser suspendiert und unter Rühren auf 55°C erhitzt. Mit Salzsäure wird ein pH-Wert von 4 eingestellt und innerhalb von 18 Minuten 6,68 Gew.%, bezogen auf das eingesetzte Pigment, Dynasylan® F8815 (Evonik), zugetropft und 30 min nachgerührt. Mit Natronlauge wird innerhalb von 22 Minuten ein pH-Wert von 8 eingestellt und 60 Minuten nachgerührt. Die Produkte werden nach Filtration bei 150° von Wasser befreit und mit 40 $\mu$m Maschenweite gesiebt. Die Bestimmung der Oberflächenenergie der in Beispiel 1 und 2 oberflächenmodifizierten Effektpigmente erfolgt nach der Methode "liegender Tropfen" unter Verwendung der Messflüssigkeiten Wasser, 1,2-Diiodmethan, Benzylalkohol und 1,2 Pentandiol mit einem Messgerät DAS 100 der Firma Krüss bei 22-24°C. Auf eine Pigmentschicht werden mittels der Steuer- und Auswerte-Software "DAS 3", Release 1.7.1 der Firma Krüss halbautomatisch 5 $\mu$l große Tropfen aufgesetzt und die Randwinkel zwischen Tropfen und Pigmentschicht-Oberfläche gemessen. Die Auswertung erfolgt nach der Methode von Owens, Wendt, Rabel und Kaelble (OWRK) mittels der o.a. Software.

Die ermittelten Gesamt-Oberflächenenergien der beschichteten Pigmente zeigen eine drastische Abnahme von 48-58 mN/m auf < 10 mN/m (Tabelle 1) nach erfolgter Oberflächenmodifizierung, wobei der polare Anteil der Gesamt-Oberflächenenergien durch die Siloxanoligomer-Beschichtung fast vollständig beseitigt wird und nur ein dispersiver Anteil verbleibt (Tabelle 2).

(alle hier mit M gekennzeichneten Effektpigmente sind magnetisierbar)

Tabelle 1:

| Gesamt-Oberflächenenergien der unbeschichteten/ beschichteten Pigmente nach OWRK; | | |
|---|---|---|
| Pigment | Gesamt-Oberflächenenergie des | |
| | unbeschichteten Pigments [mN/m] | beschichteten Pigments[*)] [mN/m] |
| Colorcrypt® M Gold | 51,4 | 7,2 |
| Colorcrypt® Intaglio Gold | 58,0 | 4,9 |
| Colorcrypt® M Silver | 58,0 | 3,0 |

(fortgesetzt)

| Gesamt-Oberflächenenergien der unbeschichteten/ beschichteten Pigmente nach OWRK; | | |
|---|---|---|
| Pigment | Gesamt-Oberflächenenergie des | |
| | unbeschichteten Pigments [mN/m] | beschichteten Pigments[*]) [mN/m] |
| Colorcrypt® M Bronze | 48,5 | 5,3 |
| [*]) alle Pigmente wurden mit 1 Gew% Dynasylan® F8815 beschichtet, außer Colorcrypt® M Gold mit 0,5 Gew% | | |

Tabelle 2:

| Dispersiver und polarer Anteil der Gesamt-Oberflächenenergien der unbeschichteten/ beschichteten Pigmente; | | |
|---|---|---|
| Pigment | Dispersiver Anteil [mN/m] | Polarer Anteil [mN/m] |
| Colorcrypt® M Gold unbeschichtet | 32,1 | 19,3 |
| **Colorcrypt® M Gold beschichtet [*])** | **7,2** | **0,0** |
| Colorcrypt® Intaglio Gold unbeschichtet | 27,6 | 30,4 |
| **Colorcrypt® Intaglio Gold beschichtet [*])** | **4,8** | **0,1** |
| Colorcrypt® M Silver unbeschichtet | 34,0 | 24,0 |
| **Colorcrypt® M Silver beschichtet [*])** | **3,0** | **0,0** |
| Colorcrypt® M Bronze unbeschichtet | 33,3 | 15,2 |
| **Colorcrypt® M Bronze beschichtet [*])** | **5,0** | **0,3** |
| [*]) alle Pigmente wurden mit 1 Gew% Dynasylan® F8815 beschichtet, außer Colorcrypt® M Gold mit 0,5 Gew% | | |

**Beispiel 3:**

Herstellung von Druckschichten

15 Gew% Colorcrypt® M Gold (oberflächenmodifiziert bzw. unbehandelt) 85 Gew% Siebdruck-Bindemittel, z.B. WEILBURGER UV 363030

Die unbehandelten bzw. oberflächenmodifizierten Pigmente werden jeweils separat in das Siebdruckbindemittel schonend eingerührt und mit einem 64T-Sieb auf Papiersubstraten auf zwei nebeneinander liegenden Flächeneinheiten verdruckt. Anschließend wird der UV-Binder mit einer UV-Lampe der Fa. Hoenle vernetzt.

Analog werden Druckfarben enthaltend Colorcrypt® M Silver, Colorcrypt® M Bronze bzw. Colorcrypt® Intaglio Gold verdruckt.

Die Helligkeitswerte L* der gedruckten Schichten bei den Messwinkeln $\theta$ von 15°, 45° und 110° werden mittels eines Farbmessgerätes BykMac von Fa. BykGardner bestimmt und der Flop Index wie folgt berechnet:

$$Flop\ Index = \frac{2,69\ (L^{*}_{15°} - L^{*}_{110°})^{1,11}}{(L^{*}_{45°})^{0,86}}$$

In Tabelle 3 sind die Flop Indices für den Helligkeitsflop der Druckschichten mit beschichteten und unbeschichteten Pigmenten zusammengestellt, wobei deutlich wird, dass sich bei geeigneter Kombination aus Bindemittel und beschichtetem Pigment der Flop Index deutlich erhöht.

Die geeignetsten Bindemittel mit dem größten Anstieg im Flop Index sind der WEILBURGER UV 363030 und G&D UV 4800 mit Flop Indices von 8-11 (pure Metallpigmente haben einen Flop Index von 15-17), wobei die Pigmente Colorcrypt® M Gold und Bronze den größten Effekt zeigen.

## Tabelle 3:

## Flop Index und Flop-Index-Differenz der unbeschichteten/ beschichteten Pigmente in verschiedenen UV-Bindemittelsystemen

| Binder | Pigment | Flop Index des | | Flop Index Differenz |
|---|---|---|---|---|
| | | unbeschichteten Pigments | beschichteten Pigments[*] | |
| WEILBURGER UV 363030 | Colorcrypt® M Gold | 3,3 | 8,3 | 5,0 |
| RUCO UV 960 161 | Colorcrypt® M Gold | 3,8 | 6,4 | 2,6 |
| | Colorcrypt® Intaglio Gold | 1,9 | 2,8 | 0,9 |
| | Colorcrypt® M Silver | 4,2 | 6,7 | 2,5 |
| | Colorcrypt® M Bronze | 3,5 | 7,8 | 4,3 |
| PRÖLL UV 57966 | Colorcrypt® M Gold | 3,3 | 7,3 | 4,0 |
| | Colorcrypt® Intaglio Gold | 2,1 | 2,6 | 0,5 |
| | Colorcrypt® M Silver | 4,0 | 6,7 | 2,7 |
| | Colorcrypt® M Bronze | 2,8 | 6,8 | 4,0 |
| G&D UV 4800 | Colorcrypt® M Gold | 3,9 | 9,8 | 5,9 |
| | Colorcrypt® Intaglio Gold | 1,8 | 5,0 | 3,2 |
| | Colorcrypt® M Silver | 5,3 | 9,3 | 4,0 |
| | Colorcrypt® M Bronze | 3,9 | 11,4 | 7,5 |

[*] alle Pigmente wurden mit 1 Gew% Dynasylan® F8815 beschichtet, außer Colorcrypt® M Gold mit 0,5 Gew%

Die Helligkeit $L_{15°}$ beim Messwinkel $\theta$ von 15°, d.h. 15° vom Glanzwinkel entfernt, wird mit dem Farbmessgerät BykMac von BykGardner bestimmt (Tabelle 4). Es zeigt sich, dass die Druckschichten mit beschichteten Pigmenten selbst bei einem Winkel, der 15° vom eigentlichen Glanzwinkel entfernt ist, noch deutlich höhere Helligkeitswerte aufweisen als die Druckschichten mit unbeschichteten Pigmenten, wobei auch hier die Kombination mit den Bindemitteln WEILBURGER UV 363030 und G&D UV 4800 die größten Steigerungen zeigen.

## Tabelle 4:

## Helligkeit $L*_{15°}$ der unbeschichteten/ beschichteten Pigmente in verschiedenen UV-Bindemittelsystemen

| Binder | Pigment | L*$_{15°}$ | | L*$_{15°}$ - Differenz |
| | | unbeschichteten Pigments | beschichteten Pigments[*)] | |
|---|---|---|---|---|
| WEILBURGER UV 363030 | **Colorcrypt® M Gold** | **63** | **93** | **30** |
| RUCO UV 960 161 | Colorcrypt® M Gold | 69 | 79 | 10 |
| | Colorcrypt® Intaglio Gold | 76 | 80 | 4 |
| | Colorcrypt® M Silver | 60 | 74 | 14 |
| | Colorcrypt® M Bronze | 64 | 80 | 16 |
| PRÖLL UV 57966 | Colorcrypt® M Gold | 68 | 85 | 17 |
| | Colorcrypt® Intaglio Gold | 78 | 81 | 3 |
| | Colorcrypt® M Silver | 62 | 76 | 14 |
| | Colorcrypt® M Bronze | 58 | 76 | 18 |
| G&D UV 4800 | **Colorcrypt® M Gold** | **69** | **98** | **29** |
| | Colorcrypt® Intaglio Gold | 75 | 93 | 18 |
| | Colorcrypt® M Silver | 67 | 83 | 16 |
| | **Colorcrypt® M Bronze** | **63** | **93** | **30** |

[*)] alle Pigmente wurden mit 1 Gew% Dynasylan® F8815 beschichtet, außer Colorcrypt® M Gold mit 0,5 Gew%

**Beispiel 4**

Herstellung von gelaserten Druckschichten

Die nach Beispiel 3 in einem beliebigen Design gedruckten (siehe Figuren 1-5), jeweils abwechselnd mit unbehandelten oder oberflächenmodifizierten Pigmenten versehenen mehrflächigen Druckbilder werden unter den in Tabelle 5 dargestellten Laserbedingungen mit einem NdVO$_4$-Laser (1064 nm, 12W) gelasert.

Dabei überstreicht die Lasermarkierung sowohl die matteren Druckbereiche, die mit unbehandelten Pigmenten gedruckt sind, als auch die metallisch glänzenden Druckbereiche, die mit oberflächenmodifizierten Pigmenten gedruckt sind, ohne dass dadurch Inhomogenitäten oder Unterschiede in der Lasermarkierung erkennbar werden. Die Lasermarkierung stellt so eine völlig homogene, nahtlose und einheitliche Verbindung her, über die gedruckten Bereiche mit unterschiedlichem Reflexionsgrad hinweg (Figur 4).

Die Wahl des Lasers ist nicht auf den nahen IR-Bereich begrenzt, sondern kann auf kommerzielle Laser bis in den UV-Bereich (355 nm) bzw. fernen IR-Bereich (10,6 μm) erweitert werden.

Tabelle 5:

| Laserparameter für verschiedene Laser-induzierte Effekte unter Verwendung eines NdVO$_4$-Lasers (1064 nm, 12 W Laser, reale Laserleistung: 10,5 W) | | | | |
|---|---|---|---|---|
| Lasereffekt | Energie [%] | Frequenz [kHz] | Geschwindigkeit [mm/s] | Fokuslage [mm] |
| Ablation ohne thermische Beanspruchung des Bedruckstoffes | 100 | 16 | 170 - 2700 | -10 bis +3 |
| | 90 -100 | 10 | 400 - 800 | +1 |
| | 100 | 10 | 500 | -1 |
| Ablation mit thermischer Beanspruchung des Bedruckstoffes | 100 | 2-64 | 170 - 2700 | -13 bis +6 |
| | 100 | 2-64 | 170 - 2700 | -13 bis +5 |

(fortgesetzt)

| Laserparameter für verschiedene Laser-induzierte Effekte unter Verwendung eines $NdVO_4$-Lasers (1064 nm, 12 W Laser, reale Laserleistung: 10,5 W) | | | | |
|---|---|---|---|---|
| Lasereffekt | Energie [%] | Frequenz [kHz] | Geschwindigkeit [mm/s] | Fokuslage [mm] |
| Dunkelfärbung ohne Ablation | 100 | 16 | 2700 | +12 |
| | 100 | 32 | 2000 - 2700 | +14 |
| | 100 | 2-64 | 170 - 2700 | +5 bis +14 |

Wird an Stelle eines $NdVO_4$-Lasers ein $CO_2$-Laser verwendet (10,6 $\mu$m, 30 W Laser, Frequenz 25 kHz) erfolgt z. B. eine Ablation bei einer Laserleistung von 30-60% bei einer Geschwindigkeit von 1000-3000 mm/s. Eine Dunkelfärbung des Substrates ohne Ablation der Pigmentschicht kann bei einer Leistung von 20% beispielsweise bei einer Geschwindigkeit von 1000 mm/s, bei 30% Laserleistung bei Geschwindigkeiten von 1500-2000 mm/s oder bei 70-80% Laserleistung bei Geschwindigkeiten von 2500-4000 mm/s erfolgen.

**Patentansprüche**

1. Druckbild auf einem Substrat, welches aus mindestens zwei Flächeneinheiten besteht, wobei jede der Flächeneinheiten plättchenförmige Effektpigmente und ein Bindemittel enthält, wobei eine erste Flächeneinheit ein erstes plättchenförmiges Effektpigment enthält, welches auf beschichteten Trägerplättchen basiert und eine äußere Schicht aus einem nichtmetallischen, anorganischen Material aufweist, und eine zweite Flächeneinheit ein zweites plättchenförmiges Effektpigment enthält, welches auf beschichteten Trägerplättchen basiert und eine äußere Schicht aus einem organischen Oberflächenmodifizierungsmittel und unterhalb der äußeren Schicht aus einem organischen Oberflächenmodifizierungsmittel eine Schicht aus einem nichtmetallischen, anorganischen Material aufweist, wobei die erste und zweite Flächeneinheit mit dem bloßen Auge gleichzeitig optisch erfassbar sind und voneinander verschiedene Flop Indices aufweisen.

2. Druckbild gemäß Anspruch 1, **dadurch gekennzeichnet, dass** die erste und die zweite Flächeneinheit einander unmittelbar benachbart sind.

3. Druckbild gemäß Anspruch 1 oder 2, **dadurch gekennzeichnet, dass** das organische Oberflächenmodifizierungsmittel organofunktionelle Siloxane enthält.

4. Druckbild gemäß Anspruch 3, **dadurch gekennzeichnet, dass** die organofunktionellen Siloxane Fluoralkylgruppen und Aminoalkylgruppen aufweisen.

5. Druckbild gemäß einem oder mehreren der Ansprüche 1 bis 4, **dadurch gekennzeichnet, dass** das erste und das zweite plättchenförmige Effektpigment sich lediglich durch die äußere Schicht aus einem organischen Oberflächenmodifizierungsmittel auf dem zweiten plättchenförmigen Effektpigment unterscheiden.

6. Druckbild gemäß einem oder mehreren der Ansprüche 1 bis 5, **dadurch gekennzeichnet, dass** es sich bei dem ersten und zweiten plättchenförmigen Effektpigment um Perlglanzpigmente, Interferenzpigmente, Metalleffektpigmente oder optisch variable Pigmente handelt.

7. Druckbild gemäß Anspruch 6, **dadurch gekennzeichnet, dass** die ersten und/oder zweiten plättchenförmigen Effektpigmente auch magnetische, elektrisch leitfähige oder lumineszierende Eigenschaften aufweisen.

8. Druckbild gemäß einem oder mehreren der Ansprüche 1 bis 7, **dadurch gekennzeichnet, dass** es eine Lasermarkierung aufweist.

9. Druckbild gemäß Anspruch 8, **dadurch gekennzeichnet, dass** sich die Lasermarkierung auf der ersten und/oder der zweiten Flächeneinheit befindet.

10. Druckbild gemäß einem oder mehreren der Ansprüche 1 bis 9, **dadurch gekennzeichnet, dass** es sich bei dem

**EP 3 036 110 B1**

Substrat um Papier, Pappe, Tapete, Tissue-Material, Kunststoff, Metall, Keramik, Glas, Holz, Textilmaterial oder um einen Verbundwerkstoff aus zwei oder mehreren der vorab genannten Materialien handelt.

11. Druckbild gemäß Anspruch 10, **dadurch gekennzeichnet, dass** es sich bei dem Papier um ein Banknotenpapier handelt.

12. Verfahren zur Herstellung eines Druckbildes gemäß Anspruch 1, wobei eine erste Druckfarbe, enthaltend ein erstes plättchenförmiges Effektpigment, welches auf einem beschichteten Trägerplättchen basiert und eine äußere Schicht aus einem nichtmetallischen, anorganischen Material aufweist, und ein Bindemittel, auf ein Substrat unter Bildung einer ersten Flächeneinheit eines Druckbildes aufgebracht und verfestigt wird, und dass eine zweite Druckfarbe, enthaltend ein zweites plättchenförmiges Effektpigment, welches auf einem beschichteten Trägerplättchen basiert und eine äußere Schicht aus einem organischen Oberflächenmodifizierungsmittel und unterhalb der äußeren Schicht aus einem organischen Oberflächenmodifizierungsmittel eine Schicht aus einem nichtmetallischen, anorganischen Material aufweist, und ein Bindemittel, auf ein Substrat unter Bildung einer zweiten Flächeneinheit eines Druckbildes aufgebracht und verfestigt wird, wobei die erste und die zweite Flächeneinheit in einem Abstand zueinander auf das Substrat aufgebracht werden, dass sie gleichzeitig mit dem bloßen Auge optisch erfassbar sind, und wobei die erste und zweite Flächeneinheit voneinander verschiedene Flop Indices aufweisen.

13. Verfahren gemäß Anspruch 12, **dadurch gekennzeichnet, dass** die erste und zweite Flächeneinheit einander unmittelbar benachbart auf dem Substrat aufgebracht werden.

14. Verfahren gemäß Anspruch 12 oder 13, **dadurch gekennzeichnet, dass** die äußere Schicht des zweiten Effektpigmentes organofunktionelle Siloxane enthält.

15. Verfahren gemäß Anspruch 14, **dadurch gekennzeichnet, dass** es sich bei den organofunktionellen Siloxanen um Siloxane handelt, die Fluoralkylgruppen und Aminoalkylgruppen enthalten.

16. Verfahren gemäß einem oder mehreren der Ansprüche 12 bis 15, **dadurch gekennzeichnet, dass** die erste und/oder zweite Druckfarbe eine Siebdruckfarbe, eine Tiefdruckfarbe, eine Flexodruckfarbe oder eine Intagliodruckfarbe ist.

17. Verfahren gemäß einem oder mehreren der Ansprüche 12 bis 16, **dadurch gekennzeichnet, dass** die erste und/oder die zweite Flächeneinheit mit einer Lasermarkierung versehen werden.

18. Verwendung eines Druckbildes gemäß einem oder mehreren der Ansprüche 1 bis 11 als Dekorationselement, als Funktionselement oder als Sicherheitsmerkmal auf einem Produkt.

19. Verwendung gemäß Anspruch 18, **dadurch gekennzeichnet, dass** es sich bei dem Produkt um Banknoten, Schecks, Kreditkarten, Aktien, Pässe, Ausweisdokumente, Führerscheine, Eintrittskarten, Wertmarken, Etiketten, Verpackungsmaterialien oder Siegel handelt.

**Claims**

1. Printed image consisting of at least two area units on a substrate, where each of the area units contains flake-form effect pigments and a binder, where a first area unit contains a first flake-form effect pigment which is based on coated support flakes and has an outer layer comprising a non-metallic, inorganic material, and a second area unit contains a second flake-form effect pigment which is based on coated support flakes and has an outer layer comprising an organic surface modifier and has a layer comprising a non-metallic, inorganic material below the outer layer comprising an organic surface modifier, where the first and second area units are simultaneously visible to the naked eye and have different flop indices from one another.

2. Printed image according to Claim 1, **characterised in that** the first and second area units are directly adjacent to one another.

3. Printed image according to Claim 1 or 2, **characterised in that** the organic surface modifier comprises organofunctional siloxanes.

4. Printed image according to Claim 3, **characterised in that** the organofunctional siloxanes contain fluoroalkyl groups

16

and aminoalkyl groups.

5. Printed image according to one or more of Claims 1 to 4, **characterised in that** the first and second flake-form effect pigments differ merely through the outer layer comprising an organic surface modifier on the second flake-form effect pigment.

6. Printed image according to one or more of Claims 1 to 5, **characterised in that** the first and second flake-form effect pigments are pearlescent pigments, interference pigments, metal-effect pigments or optically variable pigments.

7. Printed image according to Claim 6, **characterised in that** the first and/or second flake-form effect pigments also have magnetic, electrically conductive or luminescent properties.

8. Printed image according to one or more of Claims 1 to 7, **characterised in that** it has a laser marking.

9. Printed image according to Claim 8, **characterised in that** the laser marking is located on the first and/or second area unit.

10. Printed image according to one or more of Claims 1 to 9, **characterised in that** the substrate is paper, cardboard, wallpaper, tissue material, plastic, metal, ceramic, glass, wood, textile material or a composite material comprising two or more of the above-mentioned materials.

11. Printed image according to Claim 10, **characterised in that** the paper is banknote paper.

12. Process for the production of a printed image according to Claim 1, in which a first printing ink, comprising a first flake-form effect pigment which is based on a coated support flake and has an outer layer comprising a non-metallic, inorganic material, and a binder, is applied to a substrate and solidified with formation of a first area unit of a printed image, and a second printing ink, comprising a second flake-form effect pigment which is based on a coated support flake and has an outer layer comprising an organic surface modifier and has a layer comprising a non-metallic, inorganic material below the outer layer comprising an organic surface modifier, and a binder, is applied to a substrate and solidified with formation of a second area unit of a printed image, where the first and second area units are applied to the substrate at a separation from one another so that they are simultaneously visible to the naked eye, and where the first and second area units have different flop indices from one another.

13. Process according to Claim 12, **characterised in that** the first and second area units are applied to the substrate directly adjacent to one another.

14. Process according to Claim 12 or 13, **characterised in that** the outer layer of the second effect pigment comprises organofunctional siloxanes.

15. Process according to Claim 14, **characterised in that** the organofunctional siloxanes are siloxanes which contain fluoroalkyl groups and aminoalkyl groups.

16. Process according to one or more of Claims 12 to 15, **characterised in that** the first and/or second printing ink is a screen printing ink, a gravure printing ink, a flexographic printing ink or an intaglio printing ink.

17. Process according to one or more of Claims 12 to 16, **characterised in that** the first and/or second area units are provided with a laser marking.

18. Use of a printed image according to one or more of Claims 1 to 11 as decoration element, as functional element or as security feature on a product.

19. Use according to Claim 18, **characterised in that** the product is bank-notes, cheques, credit cards, shares, passports, identity documents, driving licences, entry tickets, revenue stamps, labels, packaging materials or seals.

**Revendications**

1. Image imprimée constituée par au moins deux unités de zone/d'aire sur un substrat, dans laquelle chacune des unités d'aire contient des pigments d'effet sous forme de flocons et un liant, dans laquelle une première unité d'aire contient un premier pigment d'effet sous forme de flocons qui est basé sur des flocons de support revêtus et qui comporte une couche externe qui comprend un matériau inorganique non métallique, et une seconde unité d'aire contient un second pigment d'effet sous forme de flocons qui est basé sur des flocons de support revêtus et qui comporte une couche externe qui comprend un modificateur de surface organique et qui comporte une couche qui comprend un matériau inorganique non métallique au-dessous de la couche externe qui comprend un modificateur de surface organique, dans laquelle les première et secondes unités d'aire sont simultanément visibles à l'oeil nu et présentent des indices de variation différents l'un de l'autre.

2. Image imprimée selon la revendication 1, **caractérisée en ce que** les première et seconde unités d'aire sont directement adjacentes l'une à l'autre.

3. Image imprimée selon la revendication 1 ou 2, **caractérisée en ce que** le modificateur de surface organique comprend des siloxanes organo-fonctionnels.

4. Image imprimée selon la revendication 3, **caractérisée en ce que** les siloxanes organo-fonctionnels contiennent des groupes fluoroalkyle et des groupes aminoalkyle.

5. Image imprimée selon une ou plusieurs des revendications 1 à 4, **caractérisée en ce que** les premier et second pigments d'effet sous forme de flocons diffèrent seulement dans le sens où la couche externe comprend un modificateur de surface organique sur le second pigment d'effet sous forme de flocons.

6. Image imprimée selon une ou plusieurs des revendications 1 à 5, **caractérisée en ce que** les premier et second pigments d'effet sous forme de flocons sont des pigments perlescents, des pigments d'interférence, des pigments à effet métallique ou des pigments optiquement variables.

7. Image imprimée selon la revendication 6, **caractérisée en ce que** le premier et/ou le second pigment(s) d'effet sous forme de flocons présente(nt) également des propriétés magnétiques, de conduction électrique ou de luminescence.

8. Image imprimée selon une ou plusieurs des revendications 1 à 7, **caractérisée en ce qu'**elle comporte un marquage laser.

9. Image imprimée selon la revendication 8, **caractérisée en ce que** le marquage laser est situé sur la première et/ou la seconde unité d'aire.

10. Image imprimée selon une ou plusieurs des revendications 1 à 9, **caractérisée en ce que** le substrat est du papier, du carton, du papier peint, un matériau de tissu, une matière plastique, du métal, une céramique, du verre, du bois, un matériau de textile ou un matériau composite qui comprend deux ou plus des matériaux qui ont été mentionnés ci-avant.

11. Image imprimée selon la revendication 10, **caractérisée en ce que** le papier est un papier de billets de banque.

12. Procédé pour la production d'une image imprimée selon la revendication 1, dans lequel une première encre d'impression, qui comprend un premier pigment d'effet sous forme de flocons qui est basé sur un flocon de support revêtu et qui comporte une couche externe qui comprend un matériau inorganique non métallique, et un liant, est appliquée sur un substrat et est solidifiée avec la formation d'une première unité de zone/ d'aire d'une image imprimée, et une seconde encre d'impression, qui comprend un second pigment d'effet sous forme de flocons qui est basé sur un flocon de support revêtu et qui comporte une couche externe qui comprend un modificateur de surface organique et qui comporte une couche qui comprend un matériau inorganique non métallique au-dessous de la couche externe qui comprend un modificateur de surface organique, et un liant, est appliquée sur un substrat et est solidifiée avec la formation d'une seconde unité de zone/d'aire d'une image imprimée, dans lequel les première et seconde unités d'aire sont appliquées sur le substrat selon une séparation l'une par rapport à l'autre de telle sorte qu'elles soient simultanément visibles à l'oeil nu, et dans lequel les première et seconde unités d'aire présentent des indices de variation différents l'un de l'autre.

**13.** Procédé selon la revendication 12, **caractérisé en ce que** les première et seconde unités d'aire sont appliquées sur le substrat de manière à être directement adjacentes l'une à l'autre.

**14.** Procédé selon la revendication 12 ou 13, **caractérisé en ce que** la couche externe du second pigment d'effet comprend des siloxanes organo-fonctionnels.

**15.** Procédé selon la revendication 14, **caractérisé en ce que** les siloxanes organo-fonctionnels sont des siloxanes qui contiennent des groupes fluoroalkyle et des groupes aminoalkyle.

**16.** Procédé selon une ou plusieurs des revendications 12 à 15, **caractérisé en ce que** la première et/ou la seconde encre d'impression est/sont une encre d'impression par sérigraphie, une encre d'impression par gravure, une encre d'impression flexographique ou une encre d'impression en taille douce.

**17.** Procédé selon une ou plusieurs des revendications 12 à 16, **caractérisé en ce que** la première et/ou la seconde unité(s) d'aire est/sont munie(s) d'un marquage laser.

**18.** Utilisation d'une image imprimée selon une ou plusieurs des revendications 1 à 11 en tant qu'élément de décoration, en tant qu'élément fonctionnel ou en tant que caractéristique de sécurité sur un produit.

**19.** Utilisation selon la revendication 18, **caractérisée en ce que** le produit est des billets de banque, des chèques, des cartes de crédit, des actions, des passeports, des documents d'identité, des permis de conduire, des tickets d'entrée, des timbres fiscaux, des étiquettes, des matériaux d'emballage ou des cachets/scellements.

Fig. 1:

Fig. 2:

Fig. 3:

Fig. 4:

Fig. 4a:

## Ablatierte Druckschicht

Fig. 5

Fig. 5a

Dunkelfärbung des Substrats

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1203794 A
- EP 1203795 A
- US 7160374 B
- US 4544415 A
- WO 9632446 A
- EP 1422070 A